Europäisches Patentamt

European Patent Office

Office européen des brevets

(19)

(11) Veröffentlichungsnummer : **0 031 422**
**B1**

(12) **EUROPÄISCHE PATENTSCHRIFT**

(45) Veröffentlichungstag der Patentschrift :
04.07.84

(21) Anmeldenummer : **80106713.3**

(22) Anmeldetag : **31.10.80**

(51) Int. Cl.³ : **B 21 C 37/26, B 21 D 53/08**

(54) **Vorrichtung zur Herstellung von Rohrstücken vorgegebener Länge.**

(30) Priorität : **09.11.79 DE 2945282**

(43) Veröffentlichungstag der Anmeldung :
**08.07.81 Patentblatt 81/27**

(45) Bekanntmachung des Hinweises auf die Patenterteilung : **04.07.84 Patentblatt 84/27**

(84) Benannte Vertragsstaaten :
**AT CH FR GB IT LI SE**

(56) Entgegenhaltungen :
**EP-A- 0 000 369**
**AT-B-  246 539**
**DE-A- 2 146 773**
**DE-A- 2 461 249**
**DE-A- 2 803 413**
**DE-A- 2 804 644**
**DE-A- 2 805 921**
**DE-A- 2 814 455**
**DE-C-  944 787**
**GB-A- 1 474 929**
**US-A- 3 460 225**

(73) Patentinhaber : **ELPAG AG CHUR**
**Quaderstrasse 11**
**CH-7001 Chur (CH)**

(72) Erfinder : **Bleckmann, Ingo, Dipl.-Ing- Dr.**
**Ignaz-Rieder-Kai 11**
**A-5010 Salzburg (AT)**

(74) Vertreter : **Liedl, Gerhard et al**
**Patentanwälte Liedl, Nöth Steinsdorfstrasse 21-22**
**D-8000 München 22 (DE)**

EP 0 031 422 B1

## Beschreibung

Die Erfindung betrifft eine Vorrichtung zur Herstellung von Rohrstücken vorgegebener Länge, die auf ihrer Mantelfläche eine Drahtwendel tragen, bei der eine Verform- und Verbindungseinrichtung vorgesehen ist, in welcher ein bandförmiges Ausgangsmaterial in kontinuierlichem Durchlauf zu einem rohrförmigen Gebilde verformt wird und die Rohrnaht geschlossen wird und bei der eine Wickeleinrichtung vorgesehen ist, mittels der ein Draht unter Vorspannung wendelförmig auf das rohrförmige Gebilde aufgewickelt und mit dem Rohrmantel durch eine Schweißeinrichtung verbunden wird.

Aus der DE-AI-2 814 455 ist ein Wärmeaustauschelement bekannt geworden, welches ein Rohrstück der genannten Art enthält. Das Rohrstück wird hergestellt, indem ein Metallband in Rohrform gebogen wird, wobei sich die Ränder des Bandes berühren. Auf den zwischen den Rändern verbleibenden Schlitz wird ein Band einer Kupferfolie aufgelegt. Anschließend wird ein Draht auf das so hergestellte Schlitzrohr wendelförmig aufgewickelt, wobei die Ränder aufeinandergepreßt werden und der Schlitz zu einem Kapillarspalt verengt wird. Wenn das so hergestellte Zwischenprodukt in einem Ofen erhitzt wird, schmilzt das Kupferfolienband, wobei der Kapillarspalt verschlossen und die Wicklungen der Drahtwendel an den Mantel des Rohres angelötet werden. Das Rohr kann gegebenenfalls mit einer Heizwendel und Isoliermaterial gefüllt und zu einem Rohrheizkörper weiterverarbeitet werden. Das Rohr oder der Rohrheizkörper kann dann auf eine Tragplatte aufgepreßt werden, wobei die Kuppen der Drahtwendel in das Material des Tragbleches eindringen.

Obwohl das bekannte Verfahren sehr einleuchtend ist, ergaben sich in der Praxis erhebliche Schwierigkeiten. Insbesondere sind derartig hergestellte Wärmetauscher oder Heizelemente nur für Anwendungszwecke geeignet, bei denen nur ein relativ geringes Temperaturgefälle zwischen dem Rohmantel und der Tragplatte auftritt. Bei größeren Temperaturgefällen und insbesondere bei unterschiedlichen Wärmeausdehnungsfaktoren zwischen dem Rohr und dem Tragblech ergeben sich Verschiebungen, wobei sich die Wendelkuppe nach und nach aus dem Tragblech herausarbeitet. Dies hat zur Folge, daß das Rohr vom Tragblech abfällt. Insbesondere bei Rohrheizkörpern ergibt sich hierdurch eine erhebliche Brandgefahr. Weiterhin läßt die Verankerung der Drahtkuppe in dem Tragblech zu wünschen übrig. An sich sollte die Wendelkuppe von dem Material des Tragbleches um den gesamten Drahtumfang umflossen werden, so daß die Drahtwendelkuppe vollständig in dem Material des Tragbleches eingebettet wird. Bei der Erhitzung in dem Ofen wird beim Schmelzen der Kupferfolie infolge der Kapillarwirkung das Material längs den Anlagestellen des Drahtes an der Rohrmantelfläche laufen. Die Anlagestelle der Drahtwendel an dem Rohrmantel ist dementsprechend von Material ausgefüllt und kann nicht mehr von dem Material des Tragbleches umflossen werden. Dadurch wird die angestrebte Verankerung verschlechtert.

Aus der FR-A-1 527 478 (Mecano Bundy) sind Wärmeaustauschrohre bekannt geworden, die sich z. B. für Verdampfer von Kühlschränken und dgl. eignen. Dabei wird auf den Mantel eines doppelwandigen Rohres eine Drahtwendel aufgewickelt, um so die wärmeabgebende Oberfläche des Rohres zu vergrößern. In der Vorveröffentlichung ist weiterhin eine Vorrichtung zur Herstellung derartiger Rohre beschrieben.

In der US-A-2 691 813 (Polad) ist ein Verfahren zur Herstellung von Wärmeaustauschelementen beschrieben, welche insbesondere für Verdampfer von Kühleinrichtungen bestimmt sind. Nach diesem Verfahren wird ein Rohr mit kreisförmigem Querschnitt in eine gewünschte Form, z. B. in Form einer Schlange, gebogen. Anschließend wird der Rohrmantel abgeflacht, so daß sich ein D-förmiger Querschnitt ergibt. Daraufhin wird Lötdraht in Form einer in die Länge gezogenen Wendel auf die Rohrschlange aufgebracht. Diese Anordnung wird auf ein plattenförmiges Tragelement aufgelegt. Durch Erhitzen der Anordnung über den Schmelzpunkt des Lötdrahtes wird das Rohr mit der Tragplatte verbunden.

Weiterhin ist aus der DE-A1-24 61 249 (ELPAG) ein Verfahren zum Befestigen von Verbindungsgliedern mit einem Metallteil bekannt geworden, bei dem Drahtwendeln verwendet werden, un Teile mittels eines Kaltverbindungsverfahrens miteinander zu verbinden.

Das Hauptproblem bei der Kaltverbindung liegt in dem mangelnden Ausgleich der Wärmespannungen zwischen einem Rohr mit aufgelöteter Drahtwendel und der Tragplatte. Wenn das Rohr z. B. als Mantelrohr für einen Rohrheizkörper verwendet wird und dieser auf den Boden eines elektrisch beheizten Gerätes, z. B. einer Bratpfanne oder einer Fritteuse aufgepreßt wird, dann entstehen infolge der unterschiedlichen Ausdehnung bei der Erhitzung und der Abkühlung — z. B. beim Aufgießen des Bratgutes — erhebliche Wärmespannungen zwischen dem Boden und dem Rohrheizköper. Diese können dazu führen, daß die Kaltverbindung nach einer entsprechenden Benutzungsdauer der Gerätes « ausbricht », so daß sich der Rohrheizkörper von dem Boden teilweise oder ganz löst. Je nach der Konstruktion des Gerätes, insbesondere bei Verwendung von Kunststoffgehäusen, ergeben sich dabei erhebliche Gefahren, einschließlich der Brandgefahr. Bei Wärmeaustauschvorrichtungen, z. B. Solardächern, sind zwar die Temperaturunterschiede geringer. Da die Elemente bei wärmepumpenbetriebenen Dächern eine Länge von mehreren Metern besitzen können, addieren sich die Wärmeaus-

dehnungen, wobei ein Betrag von weniger als 1/10 mm bereits zum Ausbrechen der Wendelkuppen führen kann.

Einerseits sollte also die Drahtwendel einen gewissen Bewegungsspielraum gegenüber dem Rohr besitzen, so daß Wärmespannungen ausgeglichen werden. Andererseits muß jedoch die Drahtwendel wenigstens an den Anschlußenden mit dem Rohr verbunden sein, damit die Drahtwendel nicht « aufspringt » und damit die zur Erhöhung der Radialbelastbarkeit des Rohres erwünschte Vorspannung der Drahtwendel erhalten bleibt.

Der Erfindung liegt die Aufgabe zugrunde, eine Vorrichtung so auszubilden, daß Rohre mit Drahtwendel hergestellt werden können, die so verbessert sind, daß die genannten Ansforderungen erfüllt werden.

Die Lösung der genannten Aufgabe ergibt sich aus den kennzeichnenden Merkmalen des Anspruchs.

Weitere Vorteile und Merkmale der Erfindung ergeben sich aus der nachfolgenden Beschreibung im Zusammenhang mit der beiliegenden Zeichnung. In der Zeichnung zeigen :

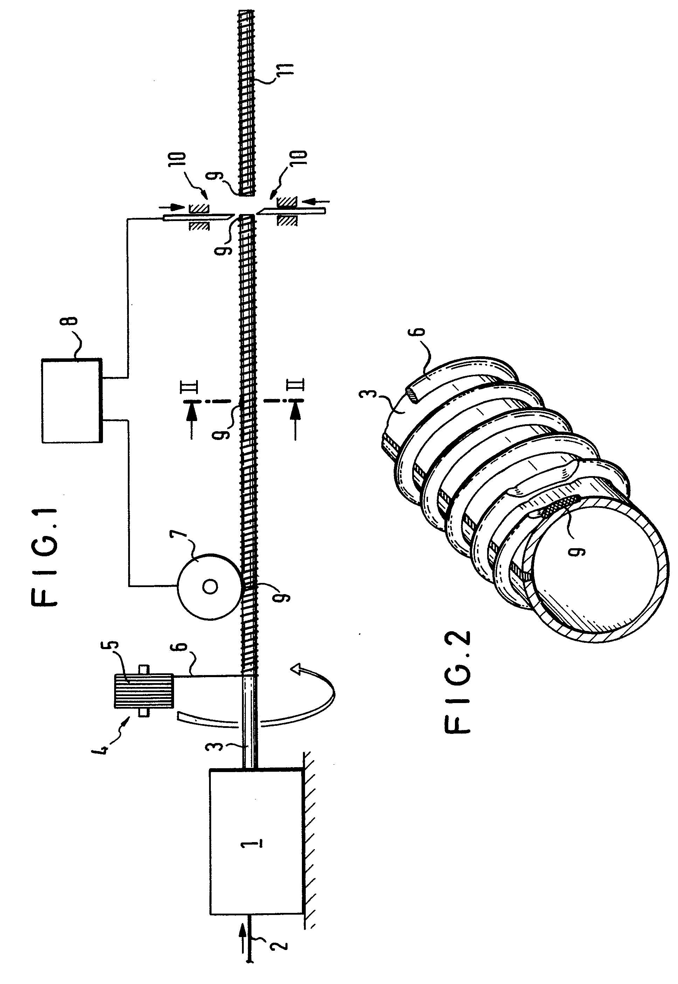

Figur 1 schematisch eine Vorrichtung zur Herstellung von Rohrstücken vorgegebener Länge gemäß der Erfindung ;

Figur 2 einen Schnitt längs der Linie II-II in Fig. 1.

In einer an sich bekannten Verform- und Verschweißeinrichtung 1 wird ein bandförmiges Ausgangsmaterial 2 im kontinuierlichen Durchlauf zu einem rohrförmigen Gebilde 3 verformt. Die von den Rändern des bandförmigen Ausgangsmaterials gebildete Rohrnaht wird bei dem kontinuierlichen Durchlauf durch die Einrichtung 1 zugeschweißt. Der Verform- und Verschweißeinrichtung 1 ist eine Wickeleinrichtung 4 zugeordnet. Dabei wird von einer Vorratsspule 5, deren Drehbarkeit entsprechend gebremst ist, ein Draht 6 abgewickelt und unter Vorspannung wendelförmig auf das rohrförmige Gebilde 3 aufgewickelt. Eine nachgeschaltete Schweißeinrichtung 7 wird in Abhängigkeit von der Durchlaufgeschwindigkeit des bandförmigen Ausgangsmaterials 2 bzw. des rohrförmigen Gebildes 3 von einer Steuereinrichtung 8 so gesteuert, daß die Schweißeinrichtung 7 in bestimmten Zeitabschnitten an Spannung gelegt wird. Der von der Schweißeinrichtung 7 auf den wendelförmig aufgewickelten Draht 6 fließende Strom fließt über 'as geerdete rohrförmige Gebilde 3 ab. Die Dauer des Stromflusses in Abhängigkeit von der Durchlaufgeschwindigkeit des bandförmigen Ausgangsmaterials 2 ist so eingestellt, daß einige wenige, vorzugsweise drei Wicklungen des Drahtes 6 mit dem Mantel des rohrförmigen Gebildes 3 verschweißt werden. Die entsprechende Schweißstelle ist jeweils bei 9 angedeutet.

Von der Steuereinrichtung 8 wird weiterhin eine Abtrenneinrichtung 10 gesteuert, die dementsprechend jeweils in Tätigkeit tritt, wenn eine dem Abstand zwischen zwei Schweißstellen 9 entsprechende Rohrlänge oder ein Vielfaches derselben von der Schweißeinrichtung 7 abgelaufen ist. Dies bedeutet, daß jeweils das Rohr in der Mitte einer Schweißstelle 9 durchgeschnitten wird. Es entsteht dementsprechend ein Rohrstück 11 einer bestimmten vorgegebenen Länge, welches eine Drahtwendel trägt, bei der jeweils mindestens eine Wendelwicklung am Rohrende mit dem Rohrmantel durch eine Schweißstelle verbunden ist.

Die Steuereinrichtung 8 wird jeweils auf die Durchlaufgeschwindigkeit des bandförmigen Ausgangsmaterials eingestellt, bzw. die Durchlaufgeschwindigkeit kann beispielsweise durch an dem bandförmigen Material anliegende, nicht dargestellte Rollen abgetastet werden. Die Einstellung der Länge des Rohrstückes 11 erfolgt durch entsprechende Veränderung des Zeittaktes, mit welchem die Schweißeinrichtung 7 und damit zwangsläufig auch die Abtrenneinrichtung 10 gesteuert wird.

Die Rohrstücke 11 können nun — wenn erwünscht nach entsprechender Verformung z. B. in eine Haarnadelform — auf ein nicht dargestelltes Tragblech, z. B. auf die Unterseite einer zur Herstellung einer Solarblechabdeckung bestimmte Blechbahn, kalt aufgepreßt werden. Dabei dringen die an der Blechbahn anliegenden Kuppen der Drahtwendel 6 in die z. B. aus Aluminium oder Kupfer bestehende Blechbahn ein. Das zwischen den Wendelwicklungen liegende Material der Blechbahn wird mit zunehmendem Eindringen nach der Seite hin weggedrückt, so daß die « Hinterschneidungen » zwischen dem größten Durchmesser des Drahtes und der Berührungslinie mit dem Rohrmantel ausgefüllt werden. Damit dieser Effekt zustandekommt, darf ein bestimmtes Steigungsverhältnis der Drahtwendel relativ zu dem Durchmesser des Drahtes nicht überschritten werden, da insoweit jede Wicklung auf die benachbarte einwirkt. Da bei der vorgeschlagenen Ausbildung die Wendelwicklungen sich etwas auf dem Rohrmantel verschieben können, gleichen sich Druckunterschiede aus mit dem Ergebnis einer wesentlich gleichmäßigeren Auffüllung der « Hinterschneidungen ».

**Anspruch**

Vorrichtung zur Herstellung von Rohrstücken vorgegebener Länge, die auf ihrer Mantelfläche eine Drahtwendel tragen, bei der eine Verform- und Verbindungseinrichtung (1) vorgesehen ist, in welcher ein bandförmiges Ausgangsmaterial (2) in kontinuierlichem Durchlauf zu einem rohrförmigen Gebilde (3) verformt wird und die Rohrnaht geschlossen wird und bei der eine Wickeleinrichtung (4) vorgesehen ist, mittels der ein Draht (6) unter Vorspannung wendelförmig auf das rohrförmige Gebilde (3) aufwickelt und mit dem Rohrmantel durch eine Schweißeinrichtung (7) verbunden wird, dadurch gekennzeichnet, daß die Schweißeinrichtung (7) in einem einstellbaren Abstand entsprechend der vorgegebenen Länge der Rohrstücke einige wenige Wicklungen des Drahtes (6) mit dem rohrförmigen Gebilde (3) verschweißt und daß eine Abtrenneinrichtung (10) vorgesehen ist, welche in Abstimmung mit der Steuerung der Schweißeinrichtung (7) die Rohrstücke (11) vorgegebener Länge in der Mitte der Schweißstelle so abtrennt, daß die abgetrennten Rohrstücke (11) an ihren beiden Ende je eine Schweißstelle (9) besitzen, mittels der mindestens eine Wicklung des Drahtes (6) mit dem rohrförmigen Gebilde (3) verbunden ist, während über die übrige Länge des Rohrstückes der Draht (6) lose, jedoch unter Vorspannung, aufgewickelt ist.

## Claim

Apparatus for producing pipe portions of predetermined length, carrying a wire coil on their peripheral surface, wherein there is provided a shaping and joining means (1) in which a starting material (2) in strip form is formed in a continuous operation into a tubular structure (3) and the seam of the pipe is closed and wherein there is provided a winding means (4) by means of which a wire (6) is wound in a pre-stressed condition in a helical configuration onto the tubular structure (3) and joined to the periphery of the pipe by a welding means (7), characterised in that the welding means (7) welds a few turns of the wire (6) to the tubular structure (3) at an adjustable spacing corresponding to the predetermined length of the pipe portions, and that there is provided a severing means (10) which, in conformity with the control of the welding means (7), severs the pipe portions (11) of predetermined length in the centre of the weld location such that the severed pipe portions (11) each have at their two ends a respective weld (9) by means of which at least one turn of the wire (6) is joined to the tubular structure (3) while the wire (6) is wound on the pipe portion in a loose condition but under a pre-stress over the remaining length of the pipe portion.

## Revendication

Dispositif pour la fabrication de tronçons tubulaires de longueur déterminée, qui portent sur leur surface extérieure un fil enroulé hélicoïdalement, dans lequel est prévu un appareil de façonnage et de jonction (1) à l'intérieur duquel une matière de départ (2) en forme de bande, en passant en continu par cet appareil, est façonnée de manière à former un produit tubulaire (3) et le joint de celui-ci est fermé, et dans lequel est prévu un appareil d'enroulement (4) au moyen duquel un fil (6) est enroulé, sous une tension initiale, hélicoïdalement sur le produit tubulaire (3) et est relié à la surface extérieure de ce dernier par un appareil de soudage (7), caractérisé en ce que l'appareil de soudage (7) soude, à des intervalles réglables correspondant à la longueur prédéterminée des tronçons tubulaires, quelques-unes seulement des spires du fil (6) au produit tubulaire (3) et en ce qu'il est prévu un appareil de tronçonnage (10) qui à la cadence de la commande de l'appareil de soudage (7) détache les tronçons tubulaires (11) de longueur prédéterminée en effectuant un tronçonnage au milieu de la soudure de telle sorte que les tronçons tubulaires séparés (11) présentent à chacune de leurs deux extrémités une soudure (9) au moyen de laquelle au moins une spire du fil (6) est reliée au produit tubulaire (3), alors que sur la longueur restante du tronçon le fil (6) est enroulé librement mais sous une tension initiale.

FIG.1

FIG.2